# EUROPEAN PATENT APPLICATION

(11) **EP 4 772 436 A1**
(43) Date of publication of application: **08.07.2026**
(21) Application number: 25150052.6
(22) Date of filing: 02.01.2025
(51) Int. Cl.: B64C 9/02, B64C 9/16, B64C 13/30, B64C 13/28

(54) **SUPPORT AND CARRIAGE ASSEMBLIES FOR A HIGH LIFT BODY ARRANGEMENT, AS WELL AS WING AND AIRCRAFT COMPRISING SAME**

(71) Applicant: AIRBUS Operations GmbH, 21129 Hamburg (DE)
(72) Inventor: ENDER, Tobias, 21129 Hamburg (DE); RAMARAJA, Nishith, 21129 Hamburg (DE); SHREEARUN, Nikhil, 21129 Hamburg (DE)
(74) Representative: LKGLOBAL Partnerschaftsgesellschaft mbB

(57) **Abstract**

A support assembly (10) for a high lift body (8), in particular a trailing-edge-flap, configured to be mounted to a spar (6) of a wing (3) of an aircraft (1), a corresponding carriage assembly (20) for carrying a high lift body (8), in particular a trailing-edge-flap, a high lift device arrangement (4) for a wing (3) of an aircraft (1), a wing (3) for an aircraft (1), and a corresponding aircraft (1) are provided, the support assembly (20) comprising a track beam (60) configured for supporting the high lift body (8) at the spar (6) movably between a stowed position (S) and a deployed position (T) along a motion path (E), the track beam (60) having at least one structural profile portion (61) adapted for transferring operational loads of the high lift body (8) into the spar (6), and at least one track profile portion (62) supported at the at least one structural profile portion (61) and adapted for guiding a carriage assembly (20) for carrying the high lift body (8) movably along the motion path (E) and taking up the operational loads; wherein the at least one structural profile portion (61) and/or the at least one track profile portion (62) are or is, respectively, provided with at least one complementing profile portion (C), and wherein the at least one structural profile portion (61), the at least one track profile portion (62), and/or at least one complementing profile portion (C) are providing a main load path (A) and a redundant load path (B) configured to alternatively and/or additionally transfer and/or take up the operational loads, respectively.

## Description

### Technical Field

The present disclosure relates to the field of mounting and actuating high lift devices, such as trailing-edge-flaps on aircraft wings. In particular, the disclosure relates to a support assembly for a high lift body, in particular a trailing edge-flap, configured to be mounted to a spar of a wing of an aircraft, to a carriage assembly for carrying a high lift body, in particular a trailing-edge-flap, to a high lift body arrangement for a wing of an aircraft, to a wing of an aircraft, and to an aircraft.

### Technical Background

High-lift devices are known from the prior art for increasing a lift produced by a wing of an aircraft especially during starting or landing operations, where the aircraft has a speed below its usual cruise speed. The high-lift bodies are commonly mechanically movable between a stowed or retracted position during normal flight and a deployed position during start or landing. High-lift bodies at trailing edges of wings are referred to as flaps, whereas high-lift bodies at leading edges of wings are referred to as slats or slots. They can be extended away from the main body of the wing in the deployed position in order to enlarge the wing surfaces and/or alter airflow to enhance the lift provided by the wing.

EP 4 063 257 A1, for example, describes an aircraft wing, including a main wing, a leading-edge high lift assembly including a high lift body, and an assembly connecting the high lift body to the main wing. The high lift body is movable relative to the main wing between stowed and deployed positions. The connection assembly includes at least one rotation element mounted to the high lift body and rotatably mounted to the main wing. The main wing comprises an upper panel with a leading-edge portion and a lower skin panel. The high lift body has a leading and a trailing edge. The high lift body trailing edge moves along the main wing upper skin panel leading edge portion when the high lift body is moved between the stowed and deployed positions. The upper skin panel leading edge portion is elastically deformed when the high lift body is moved from the stowed to the deployed position.

EP 2 726 372 B1 pertains to an airfoil with a main wing, with at least one high-lift body that is arranged on the leading edge of the main wing such that it can be moved between an initial adjusting position and a maximally changed adjusting position referred to the initial adjusting position, with at least one guide mechanism, by means of which the high-lift body is movably coupled to the main wing, and with a driving device for realizing adjusting movements of the high-lift body, wherein the guide mechanism features: - an adjusting lever arrangement with at least one adjusting lever, wherein at least one adjusting lever of the adjusting lever arrangement is coupled to the high-lift body, - at least one first main wing lever that is coupled to the main wing by means of a first main wing pivot joint and to the at least one adjusting lever by means of a first adjusting lever pivot joint such that an effective lever arm is formed between the first adjusting lever pivot joint and the high-lift body, - at least one second main wing lever that is coupled to the main wing by means of a second main wing pivot joint and to the at least one adjusting lever by means of a second adjusting lever pivot joint such that an effective lever arm is formed between the second adjusting lever pivot joint and the first adjusting lever pivot joint, as well as to a method for realizing adjusting movements of a high-lift body relative to a main wing.

US 5 039 032 A describes a highly tapered wing tip extension added to the tip of an existing swept, trapezoidal airplane wing for reducing high speed drag significantly. A smaller, highly swept, extension does not require a leading-edge device to protect against low speed stall. A larger, less swept, extension requires a tapered slat for which two mechanisms are presented.

US 1 353 666 A describes wings and similar members for aeroplane flying machines constructed with a small formerly located auxiliary wing, separated from the main wing to produce a comparatively narrow through slot extending substantially throughout the wing in a direction transversely of the line of flight, third auxiliary wing having its angle of incidence less than the angle of incidence of said main wing, having its nose located at the approximate level of the nose of the main wing, and having its upper rearward edge at approximately the same distance above the court of the main ring is the highest point of the Kimber offset main ring so as to mask the leading portion of said main wing.

Peter K. C. Rudolph, "High-Lift Systems on Commercial Subsonic Airliners", NASA Contractor Report 4746, CONTRACT A46374D(LAS), September 1996, National Aeronautics and Space Administration, gives an overview of different high-lift systems and their application in aeroplane models. According to the report, wing leading edges evolved from fixed leading edges to a simple Krueger flap, and from fixed, slotted leading edges to two- and three-position slats and variable-camber (VC) Krueger flaps. The complexity of high-lift systems probably peaked on the Boeing 747, which has a VC Krueger flap and triple-slotted, inboard, and outboard trailing-edge flaps. Since then, the tendency in high-lift system development has been to achieve high levels of lift with simpler devices in order to reduce fleet acquisition and maintenance costs.

Aerospace structures are designed to be damage tolerant have to fulfil certain safety requirements in terms of stability and durability. For example, according to the prior art, such safety requirements can commonly be met by oversizing parts involved to a degree that crack formation is avoided or at least slowed down or limited such that so-called safe life for respective assemblies is achieved. Nevertheless, the oversizing can lead to weight and design issues which may be problematic for aircraft, in view of that adding any weight for meeting safety requirements may in turn decrease flight ranges and/or payload.

A further possibility for meeting safety requirements are regular inspection cycles. During inspection, apparent crack formation can be discovered with relatively low effort. However, the high inspection frequency leads to increased costs for inspections, and furthermore, inspection costs can additionally rise for inspecting any covered-up or hidden parts which require dismantling certain structures for inspection.

### Summary

It may thus be seen as an object to it may be seen as an object to provide failsafe high lift body arrangements that meet certain safety requirements without overly adding weight and/or complexity to mechanical structures of an aircraft, in particular the aircraft wings. Moreover, it can be seen as an object to reduce aircraft inspection costs. These objects are at least partly achieved by the subject-matter of the independent claims.

According to an aspect, a support assembly for a high lift body, in particular a trailing-edge-flap, configured to be mounted to a spar of a wing of an aircraft, is provided, comprising a track beam configured for supporting the high lift body at the spar and/or a fuselage of the aircraft movably between a stowed position and a deployed position along a motion path, the track beam having at least one structural profile portion adapted for transferring operational loads of the high lift body into the spar and/or into the fuselage of the aircraft, and at least one track profile portion supported at the at least one structural profile portion and adapted for guiding a carriage for carrying the high lift body movably along the motion path and taking up the operational loads; wherein the at least one structural profile portion and/or the at least one track profile portion are or is, respectively, provided with at least one complementing profile portion; and wherein the at least one structural profile portion, the at least one track profile portion, and/or at least one complementing profile portion are providing a main load path and a redundant load path configured to alternatively and/or additionally transfer and/or take up the operational loads, respectively.

According to an aspect, a carriage assembly for carrying a high lift body, in particular a trailing-edge-flap, is provided, configured to be moved along the motion path provided by the track beam of a corresponding support assembly.

According to an aspect, a high lift body arrangement for a wing of an aircraft is provided, comprising at least one high lift body, in particular a trailing-edge-flap, configured to be attached to a corresponding support assembly and/or to a corresponding carriage assembly.

According to an aspect, a wing for an aircraft is provided, comprising at least one corresponding high lift body arrangement.

According to an aspect, an aircraft is provided, comprising at least one corresponding wing.

The at least one structural profile portion and corresponding complementing profile portion can be made of aluminium or an aluminium alloy. The at least one track profile portion and corresponding complementing profile portion can be made of titanium alloy. The spar may be provided at a main body of the wing.

The proposed solution enables to provide double load paths, comprising the main load path and at least one redundant load path, to components relating to high lift bodies. A double load path track beam is provided which can be located at the wing trailing edge from a passenger aircraft. A track beam is a major part of the high lift system that enables aircrafts to take-off and land safely with low speed. The double load path track beam provides increased reliability and may help to reduce inspection efforts when compared to the existing single load path designs following a "safe-life" approach according to the prior art and considering that regular inspection activities relate to fail-safe design concepts.

Advantages of the proposed solution lie in enhanced damage tolerance and improved general inspection time. Due to a true redundancy, a certain element of the main load path may completely fail and remaining elements providing the redundant load path can take over respective loads and/or functions. Any of the remaining profile portions, including the complementing profile portion, may still enable full functionality. The fail-safe design with multiple load path mechanism provides an improved general inspection time which is carried out at an e.g. 6-year interval for crack detection is significantly increased resulting in reduced maintenance cost.

The complementing profile portion may complement a respective track profile portion and/or structural profile portion. In other words, the track beam may be constructed of profile portions complementing each other such that they allow to be assembled in such a way that they establish the main load path and the redundant load path. For example, a track profile portion and at least one respective complementing profile portion can provide the track profile serving as a main load path.

Further developments can be derived from the dependent claims and from the following description. Features described with reference to devices and arrangements may be implemented as method steps, or vice versa. Therefore, the description provided in the context of the aircraft and its components apply in an analogous manner also to respective methods. In particular, the functions of the aircraft and of its components may be implemented as method steps of the methods and the method steps may be implemented as functions of the aircraft and its components.

According to an embodiment of a support assembly, the at least one complementing profile portion is adapted to take up the operational loads independently of the at least one structural profile portion and/or the at least one track profile portion. The operational loads may include static loads and dynamic loads. The operational loads may at least correspond to a limit load, preferably to an ultimate load, to be expected during operation of the support assembly. Thereby, double load paths enabling a fully redundant structure may be provided by means of the at least one structural profile portion and the at least one complementing profile portion.

According to an embodiment of a support assembly, the at least one complementing profile portion at least doubles the at least one structural profile portion and/or the at least one track profile portion. The at least one structural profile portion and/or the at least one track profile portion and the respective at least one complementing profile portion may have essentially equal cross-sectional shapes. The at least one structural profile portion and/or the at least one track profile portion and the respective at least one complementing profile portion may essentially be of the same profile type. This may further help in assembling double load paths enabling a fully redundant structure by means of the at least one structural profile portion and the at least one complementing profile portion.

According to an embodiment of a support assembly, the at least one structural profile portion and/or the at least one track profile portion and the respective at least one complementing profile portion are nested into each other. The at least one mounting part at least one structural profile portion and/or the at least one track profile portion and the respective at least one complementing profile portion can at least section-wise overlap with and/or interleave each other. Thereby, a preferably compact and lightweight support assembly can be provided.

According to an embodiment of a support assembly, the at least one track profile portion and the respective at least one complementing profile portion at least sectionwise encompass and/or encapsulate the at least one structural profile portion and the respective at least one complementing profile portion. At least a section of the track beam can be mirror-symmetrically shaped with respect to a symmetry plane extending essentially in parallel to a longitudinal direction and a transverse direction of the support assembly. This may further help in assembling a preferably compact and lightweight as well as self-protecting support assembly in that structures and components can surround and/or encapsulate other structures and components to avoid damage to the encompassed and/or encapsulated parts by shielding them against any potentially harmful environmental impacts.

According to an embodiment of a support assembly, the support assembly further comprises at least one mounting part configured to mount the track beam to the spar and/or to a fuselage of the aircraft for transferring and/or taking up the operational loads, wherein at least one redundancy part is provided for the at least one mounting part to redundantly transfer and/or take up the operational loads. In other words, a redundancy part may be added to the mounting part for mounting the track beam to the spa and/or the fuselage. This may further help in providing double load paths to components relating to high lift bodies.

According to an embodiment of a carriage assembly, the carriage assembly comprises at least two load bearing parts each configured to be moved along the motion path provided by the track beam of the support assembly, and to provide a main load path and a redundant load path to alternatively and/or additionally transfer and/or take up the operational loads, respectively. The load bearing parts can provide the primary load bearing structure of the carriage assembly. The load bearing structures can each provide a structural carriage portion and/or a redundancy carriage portion which may serve as the main load path and/or the redundant load path, respectively. At least one redundancy carriage portion can be adapted to take up the operational loads independently of the at least one structural carriage portion. This may further help in providing double load paths to components relating to high lift bodies.

According to an embodiment of a carriage assembly, the carriage assembly further comprises at least one connecting element connecting the at least two load bearing parts to each other. The connecting elements can be formed as metal components providing doublers. The doublers can be provided in the form of relatively thin metal plates that are used to secure the at last two load bearing parts of the carriage together. Thereby, the at least two load bearing parts may be joined such that their movements are synchronised to act as a single piece carriage providing a dual path.

According to an embodiment of a carriage assembly, the carriage assembly further comprises an O-shaped carriage module configured to encompass the track beam. The load bearing parts can be provided as at least two O-shaped carriage modules as 'O-ring' parts. The connecting elements can be used to fasten the 'O-rings' together on both the inner and outer surfaces of the carriage assembly. Each O-shaped carriage modules can act as a load bearing part. Therefore, the at least two O-shaped carriage modules can each provide a structural carriage portion and/or a redundancy carriage portion. At least one redundancy O-shaped carriage module can be adapted to take up the operational loads independently of the respective at least one other O-shaped carriage module. This may further help in providing double load paths to components relating to high lift bodies.

According to an embodiment of a carriage assembly, the carriage assembly further comprises at least two sets of roller assemblies each configured to be roll along the motion path provided by the track beam of the support assembly. The roller assemblies can each contain a set of rollers along with a respective roller bearing sub-assembly on each load bearing part. For example, a total number of 16 rollers can be provided on each load bearing part of which 8 are vertical rollers and 8 are horizontal rollers. Each individual load bearing part can house four vertical and four horizontal roller assemblies. Thereby, the at least two load bearing parts can have a full set of rollers enabling to move the carriage along the motion path provided by the track beam. This may further help in providing double load paths to components relating to high lift bodies.

According to an embodiment of a carriage assembly, the carriage assembly further comprises at least two device load introduction brackets each configured to transfer an operational loads between the high lift device and the carriage assembly. The device load introduction brackets can provide at least two connecting parts that can be fixed to the carriage assembly and provide a fail-safe attachment point to the flap. The carriage assembly may further comprise at least two swing link elements. Each of the swing link element can connect the high lift device to the carriage assembly, for example, via the device load introduction brackets, while allowing spanwise movements arising from wing bending. This may further help in providing double load paths to components relating to high lift bodies, and to assure respective operational tolerances.

The high lift device arrangement may comprise at least one high lift device with a high-lift body, configured to be attached to the support assembly, in particular, via the carriage. The high lift device arrangement may further comprise the at least two swing links elements. Each of the swing link elements can connect the high lift device to the carriage assembly, for example, via the device load introduction brackets, while allowing spanwise movements arising from wing bending. The high lift device arrangement may further comprise at least two end rib elements. The end rib elements may provide a fail-safe end rib assembly. Thereby, a fail-safe connection component can be provided that enables an attachment of the high lift device to the carriage assembly via a hinge line in direction of flight (DOF), for example, to connect the swing link elements to the high lift device. This may additionally help in providing double load paths to components relating to high lift bodies, and to assure respective operational tolerances.

### Brief Description of the Drawings

The subject matter will hereinafter be described in conjunction with the following drawing figures, wherein like numerals denote like elements, and wherein:
Fig. 1 is a schematic top view of an aircraft having wings provided with high lift body arrangements.
Fig. 2 is a schematic top view of a detail II of a wing of the aircraft depicted in Fig. 1.
Fig. 3 is a schematic perspective view of the support station of the high lift body arrangement comprising a support assembly, a carriage assembly and a high lift body.
Fig. 4 is a schematic top view of the support station of the high lift body arrangement illustrated in Fig. 3.
Fig. 5 is a schematic cross-sectional view of an embodiment of a track beam for a support assembly along the cross-sectional line A-A depicted in Fig. 4 comprising a structural profile portion in the form of an I-beam.
Fig. 6 is a schematic cross-sectional view of a further embodiment of a track beam for a support assembly along the cross-sectional line A-A depicted in Fig. 4 comprising a structural profile portion in the form of an I-beam.
Fig. 7 is a schematic cross-sectional view of another embodiment of a track beam for a support assembly along the cross-sectional line A-A depicted in Fig. 4 comprising a structural profile portion in the form of an I-beam.
Fig. 8 is a schematic cross-sectional view of an embodiment of a track beam for a support assembly along the cross-sectional line A-A depicted in Fig. 4 comprising a structural profile portion in the form of U-profiles.
Fig. 9 is a schematic cross-sectional view of a further embodiment of a track beam for a support assembly along the cross-sectional line A-A depicted in Fig. 4 comprising a structural profile portion in the form of U-profiles.
Fig. 10 is a schematic cross-sectional view of another embodiment of a track beam for a support assembly along the cross-sectional line A-A depicted in Fig. 4 comprising a structural profile portion in the form of U-profiles.
Fig. 11 is a schematic cross-sectional view of an embodiment of a track beam for a support assembly along the cross-sectional line A-A depicted in Fig. 4 comprising a structural profile portion in the form of a rectangular profile.
Fig. 12 is a schematic cross-sectional view of a further embodiment of a track beam for a support assembly along the cross-sectional line A-A depicted in Fig. 4 comprising a structural profile portion in the form of a rectangular profile.
Fig. 13 is a schematic cross-sectional view of another embodiment of a track beam for a support assembly along the cross-sectional line A-A depicted in Fig. 4 comprising a structural profile portion in the form of a rectangular profile.
Fig. 14 is a schematic cross-sectional view of an additional embodiment of a track beam for a support assembly along the cross-sectional line A-A depicted in Fig. 4 comprising a structural profile portion in the form of a rectangular profile.
Fig. 15 is a schematic cross-sectional view of a further additional embodiment of a track beam for a support assembly along the cross-sectional line A-A depicted in Fig. 4 comprising a structural profile portion in the form of a rectangular profile.
Fig. 16 is a schematic cross-sectional view of an embodiment of a track beam for a support assembly along the cross-sectional line A-A depicted in Fig. 4 comprising a structural profile portion in the form of a hexagonal profile.
Fig. 17 is a schematic cross-sectional view of an embodiment of a track beam for a support assembly along the cross-sectional line A-A depicted in Fig. 4 comprising a structural profile portion in the form of a cross-shaped profile.
Fig. 18 is a schematic cross-sectional view of a further embodiment of a track beam for a support assembly along the cross-sectional line A-A depicted in Fig. 4 comprising a structural profile portion in the form of a cross-shaped profile.
Fig. 19 is a schematic cross-sectional view of an embodiment of a track beam for a support assembly along the cross-sectional line A-A depicted in Fig. 4 comprising a structural profile portion in the form of a C-shaped profile.
Fig. 20 is a schematic cross-sectional view of a further embodiment of a track beam for a support assembly along the cross-sectional line A-A depicted in Fig. 4 comprising a track profile portion in the form of a C-shaped profile.
Fig. 21 is a schematic cross-sectional view of another embodiment of a track beam for a support assembly along the cross-sectional line A-A depicted in Fig. 4 comprising a structural profile portion in the form of a C-shaped profile.
Fig. 22 is a schematic perspective view of a detail XXII depicted in Fig. 3.
Fig. 23 is a schematic perspective view of a support assembly and a carriage assembly for a high lift body arrangement.
Fig. 24 is a schematic perspective exploded view of the carriage assembly for the high lift body arrangement illustrated in Fig. 23.
Fig. 25 is a schematic perspective view of the carriage assembly connected to the high lift body for the high lift body arrangement illustrated in Fig. 23.
Fig. 26 is a schematic cross-sectional view of the support assembly and the carriage assembly for a high lift body arrangement across a cross-sectional line B-B depicted in Fig. 4.
Fig. 27 is a schematic cross-sectional view of the support assembly and the carriage assembly for a high lift body arrangement across a cross-sectional line C-C depicted in Fig. 4.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

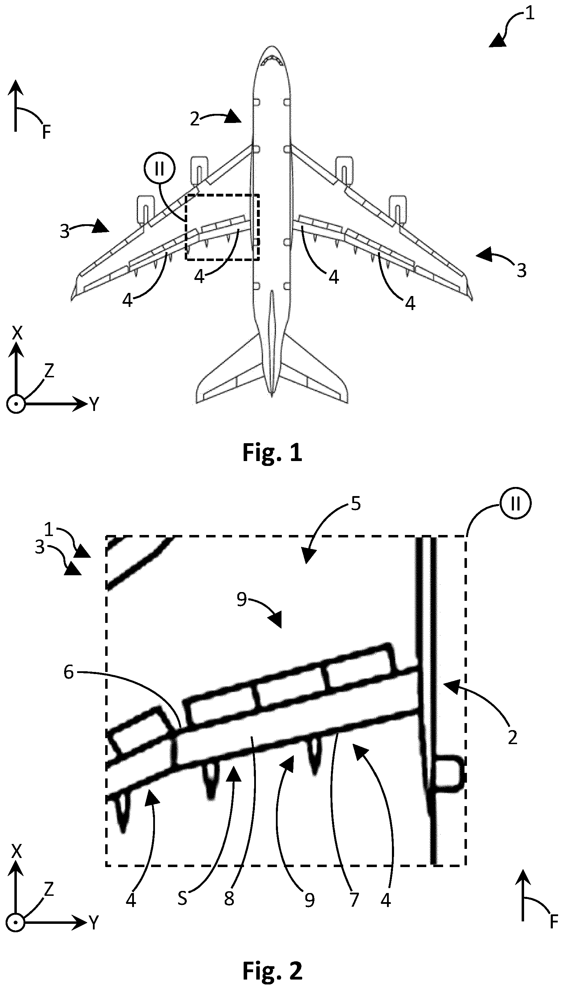

Fig. 1 shows a schematic top view of an aircraft 1 having a fuselage 2 provided with two wings 3 having high lift body arrangements 4. The aircraft 1 extends in a longitudinal direction X, a transverse direction Y and a height direction Z together constituting a Cartesian coordinate system. The aircraft 1 is configured to travel in a travel direction F running essentially in parallel with the longitudinal direction X, in particular in the air, where the travel direction F is essentially a direction of flight of the aircraft 1.

Fig. 2 shows a schematic top view of a detail II of one of the wings 3 of the aircraft 1 illustrated in Fig. 1 comprising a number of high lift body arrangements 4 attached to a main body 5 of the wing 3, in particular a spar 6 thereof, for example a rear spar. Each of the high lift body arrangements 4 provides a trailing edge 7 for the wing 3. In operation, the aircraft 1 travels in the travel direction F, and an air stream (not shown) flows off from the trailing edge 7 in a direction opposite to the travel direction F.

The high lift body arrangements 4 are shown in a stowed position S which can be also interpreted as a retracted position, where high lift bodies 8 of the high lift body arrangements 4 are retracted into the wing 3, whereas in a deployed position T, they protrude from the main body 5 in a direction opposite to the travel direction F to enhance the lift off the wing 3 acting upon the aircraft 1 essentially in the height direction Z. The high lift body arrangements 4 each comprise at least one high lift body 8 providing the trailing edge 7. A fully assembled high lift body arrangement 4 including the high lift body 8 along with respective components and mechanisms for operating the high lift body 8 may be regarded as a high-lift device.

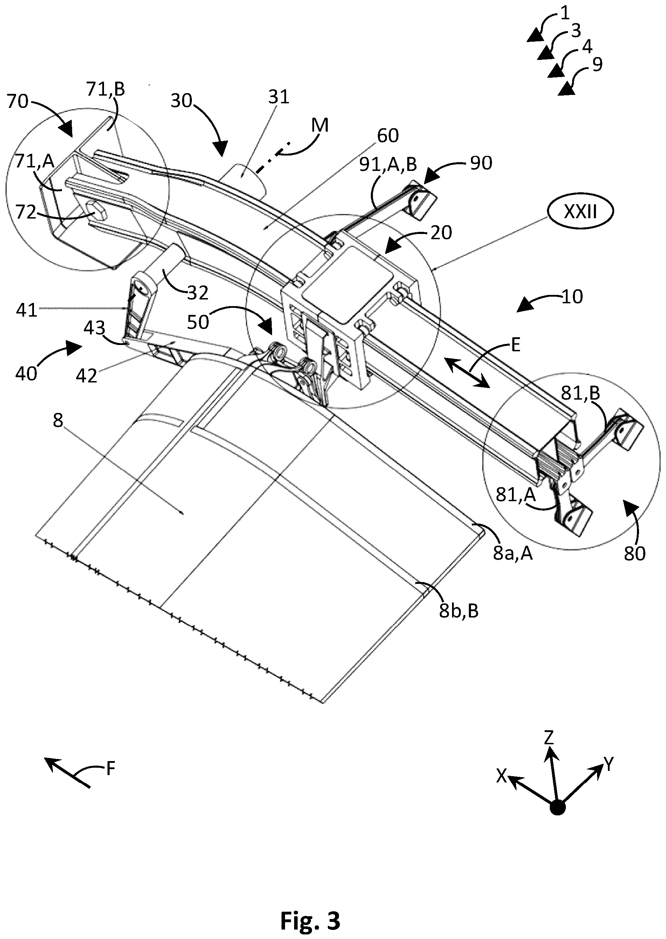

Fig. 3 shows a schematic perspective view of the support station 9 of the high lift body arrangement 4 comprising the high lift body 8, a support assembly 10, and a carriage assembly 20. Furthermore, the high lift body arrangement 4 and/or the support station 9 may comprise a drive assembly 30, an actuation assembly 40, and a connection assembly 50. The support assembly 10 comprises a track beam 60, a front attachment sub-assembly 70, an aft attachment sub-assembly 80, and a side attachment sub-assembly 90.

The drive assembly 30 may comprise a drive organ 31 or drive unit, such as an actuator in the form of an electric motor, hydraulic system, or alike, which can be connected to the actuation assembly 40 via a drive shaft 32. A drive arm 41 of the actuation assembly 40 may be connected to the drive shaft 32 in a torque-transmitting manner to transfer a force from the drive organ 31 to the actuation assembly 40 acting around a rotational axis M of the drive shaft 32. An actuating arm 42 can be connected to the drive arm 41 via a transmission link 43 or joint for transmitting the drive torque acting on the drive arm 42 onto the high lift body 8, for example, via the connection assembly 50.

The connection assembly 50 can connect the high lift body 8 to the carriage assembly 20 and/or to the actuation assembly 40. For example, the connection assembly 50 may be connected to at least two structural elements of the high lift body 8, such as a first end rib 8a and a second end rib 8b of the high lift body 8, to provide a dual load path. Any component of the connection assembly 50 may be regarded as a part of the carriage assembly 20 and/or the actuation assembly 40 and/or can be integrated therein.

The track beam 60 can be regarded as a guidance or track sub-assembly, carries and guides the carriage assembly 20 along a motion path E, and can be attached to the spar 6 via the front attachment sub-assembly 70, and to the fuselage 2 via the rear attachment sub-assembly 80 and/or the side attachment sub-assembly 90. The front attachment sub-assembly 70 can comprise two connection lugs 71 and connecting bolt 72 which can be each provided in the doubled fashion to provide a fail-safe connection between the track beam 60 and the spar 6. The rear attachment sub-assembly 80 can comprise connecting links 81, for example, at least two connecting links 81 of which one may be extending essentially in parallel to a horizontal direction, for example, the transverse direction Y, while the respective other one may extend essentially in parallel to the height direction Z which can be fixed to corresponding failsafe horizontal and vertical all logs, respectively, on the fuselage 2. The side attachment sub-assembly 90 may comprise at least one connecting link 91 as well for connecting the track team 60 to the fuselage 2.

The end ribs 8a, 8b, support assembly 10, carriage assembly 20, drive assembly 30, an actuation assembly 40, connection assembly 50, track beam 60, front attachment sub-assembly 70, aft attachment sub-assembly 80, and/or side attachment sub-assembly 90 as well as their respective modules, components, parts and/or elements may each provide a main load path A and a redundant load path B which may each be adapted to independently take up the operational loads. The respective main load path A and redundant load path B may double each other. For example, the connection lugs 71 of the front attachment sub-assembly 70, and/or the connecting links 81, 91 of the rear attachment sub-assembly 81 and/or of the side attachment sub-assembly 90 may each provide a main load path A and/or redundancy load path B, respectively.

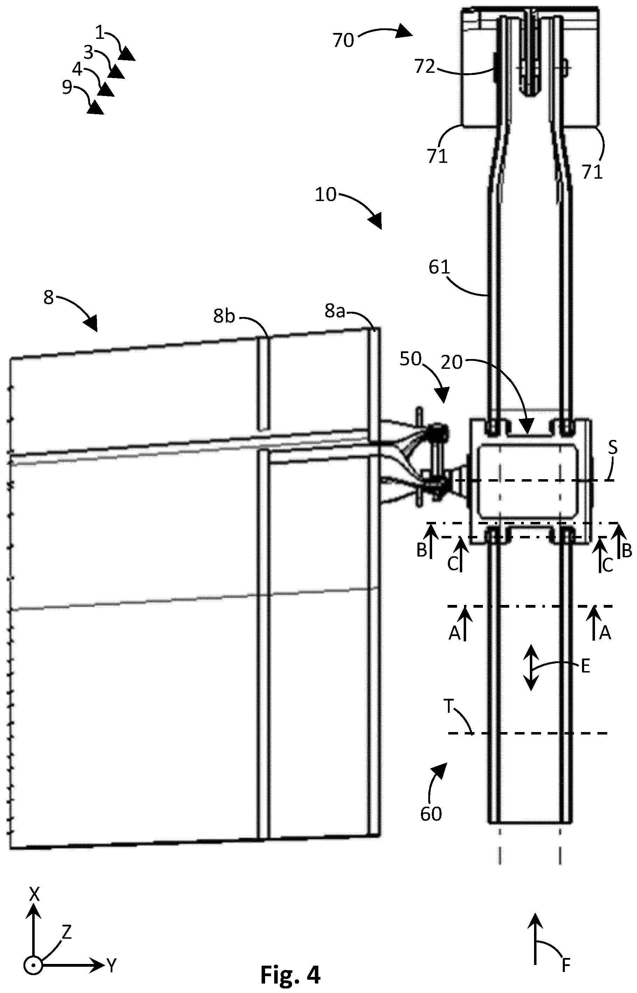

Fig. 4 shows a schematic top view of the support station 9 of the high lift body arrangement 4 illustrated in Fig. 3. Here it becomes apparent that the high lift body 8 is carried by the carriage assembly 20 and connected thereto via the connection assembly 50. In the present example, the carriage assembly 20 and thus the high lift body 8 are in the stowed position S and can be moved to the deployed position T by driving the carriage assembly 20 and thus the high lift body 8 along the motion path E essentially opposite to the travel direction F.

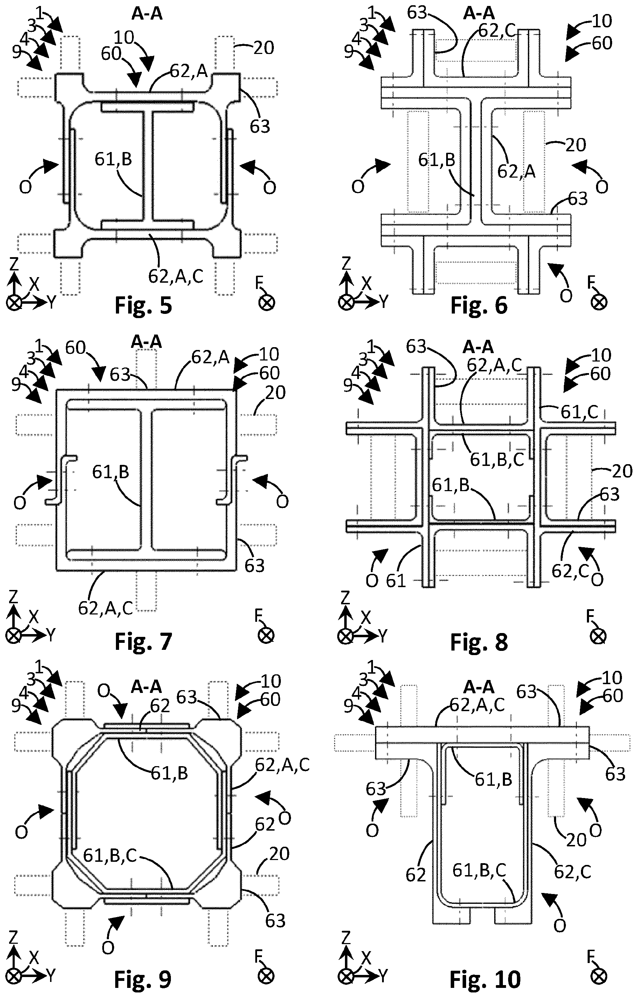

Fig. 5 shows a schematic cross-sectional view of an embodiment of a track beam 60 for a support assembly 10 along the cross-sectional line A-A depicted in Fig. 4 comprising a structural profile portion 61 in the form of an I-beam. Furthermore, the track beam 61 comprises at least one track profile portion 62. In the present example, two track profile portions 62 are provided which are encapsulate the structural profile portion 61.

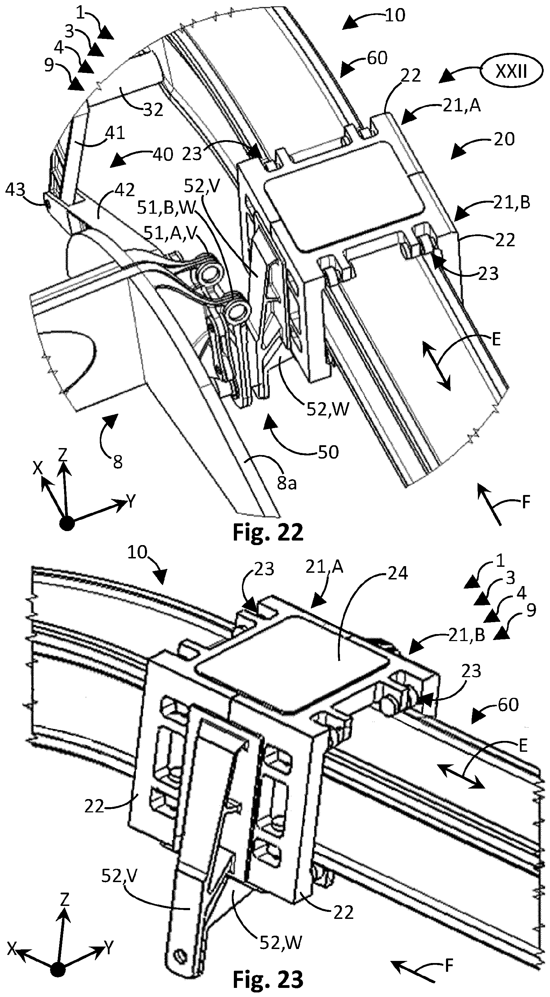

The track profile portions 62 overlap each other in an overlap region O in a projection along the transverse direction Y. Each of the track profile portions 62 can be a complementing profile portion C for the respective other track profile portion 62. Each of the track profile portions 61 can provide a track section 63 for supporting and/or guiding rollers depicted as dotted lines of the carriage assembly 20 (see Figs. 22 to 27) enabling to smoothly move the carriage assembly 20 along the motion path E.

Fig. 6 shows a schematic cross-sectional view of a further embodiment of a track beam 60 for a support assembly 10 along the cross-sectional line A-A depicted in Fig. 4 comprising a structural profile portion 61 in the form of an I-beam. The structural profile portion 61 is surrounded by a number of track profile portions 62. For example, two U-shaped track profile portions 62 are embedded within the structural profile 61 while on the top and bottom of the structural profile portions 51, to L-shaped structural profiles and another U-shaped structural profile is arranged, respectively, thus providing respective complementing profile portions C as well as overlapping regions 0 and respective projections along the transverse direction Y and the height direction Z.

Fig. 7 shows a schematic cross-sectional view of another embodiment of a track beam 60 for a support assembly 10 along the cross-sectional line A-A depicted in Fig. 4 comprising a structural profile portion 61 in the form of an I-beam. Similar to the embodiment shown in Fig. 5, the structural profile portion 61 is surrounded by two essentially U-shaped track profile portions 62 which can be regarded as providing redundancy to each other and have overlapping regions O in a projection along the transverse direction Y.

Fig. 8 shows a schematic cross-sectional view of an embodiment of a track beam 60 for a support assembly 10 along the cross-sectional line A-A depicted in Fig. 4 comprising a structural profile portion 61 in the form of U-profiles. For example, to structural profile portions 61 are provided of which one can serve as a complementing profile portion C. The structural profile portions 61 are surrounded by further structural profile portions 61 in the region of their short legs providing at least one further complementing profile portion C. Track profile portions 62 in the form of U-profiles and calls the structural profile portion 61 in a manner such that they can provide complementing profile portions C for each other while overlapping regions O in a projection along the transverse direction Y as well as along the height direction Z are provided.

Fig. 9 shows a schematic cross-sectional view of a further embodiment of a track beam 60 for a support assembly 10 along the cross-sectional line A-A depicted in Fig. 4 comprising a structural profile portion 61 in the form of U-profiles. Track profile portions 62 in the form of U-profiles and calls the structural profile portion 61 in a manner such that they can provide complementing profile portions C for each other while overlapping regions O in a projection along the transverse direction Y as well as along the height direction Z are provided. The track beam 60 can be provided in a manner that for each structural profile portion 61 and track profile portion 62 a respective complementing profile portion C is provided.

Fig. 10 shows a schematic cross-sectional view of another embodiment of a track beam 60 for a support assembly along the cross-sectional line A-A depicted in Fig. 4 comprising a structural profile portion in the form of U-profiles. A flat track profile portion 62 covering the structural profile portions 61 from above can provide a top of the track beam 60. At each side of the structural profile portions 61, respective S-shaped additional track profile portions 62 can be provided which can again constitute complementing profile portions C for each other, while multiple overlapping regions O and projections along the transverse direction Y and the height direction Z can be provided.

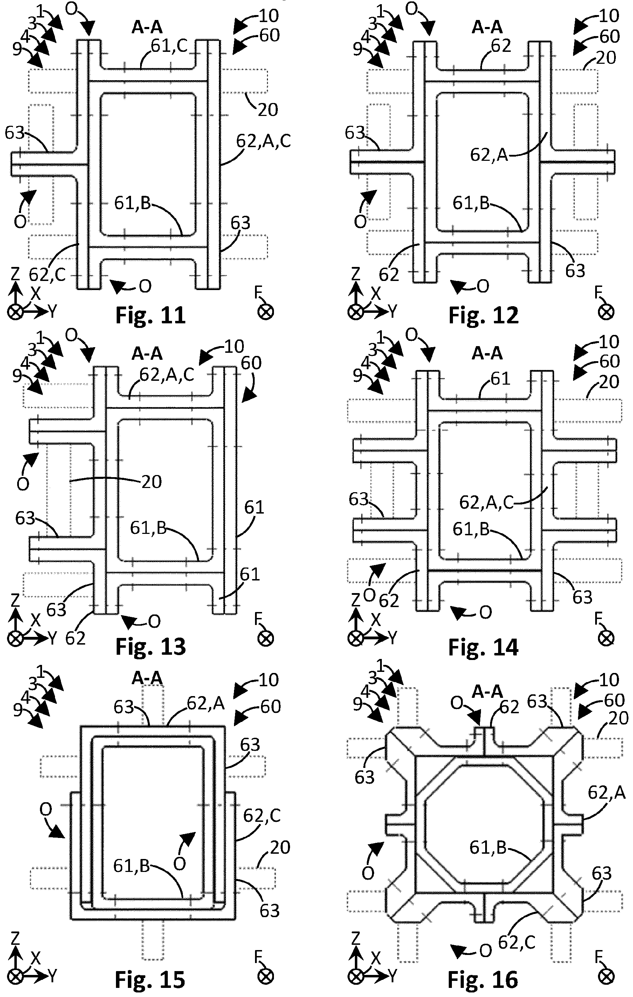

Fig. 11 shows a schematic cross-sectional view of an embodiment of a track beam 60 for a support assembly 10 along the cross-sectional line A-A depicted in Fig. 4 comprising a structural profile portion 61 in the form of a rectangular profile. At the top and the bottom of the rectangular profile, U-shaped structural profile portions 61 can be provided as complementing profile portions C. At the lateral sides of the structural portion 61, track profile portions 62 can be arranged and provide complementing profile portions C for each other, while overlapping regions and projections along the transverse direction Y and the height direction Z are created.

Fig. 12 shows a schematic cross-sectional view of a further embodiment of a track beam 60 for a support assembly 20 along the cross-sectional line A-A depicted in Fig. 4 comprising a structural profile portion 61 in the form of a rectangular profile. At the top and the bottom of the rectangular profile, U-shaped structural profile portions 61 can be provided as complementing profile portions C. At the lateral sides of the structural portion 61, track profile portions 62 can be arranged and provide complementing profile portions C for each other, while overlapping regions R in projections along the transverse direction Y and the height direction Z are created.

Fig. 13 shows a schematic cross-sectional view of another embodiment of a track beam for a support assembly along the cross-sectional line A-A depicted in Fig. 4 comprising a structural profile portion in the form of a rectangular profile. At the top and the bottom of the rectangular profile, U-shaped structural profile portions 61 can be provided as complementing profile portions C. At the lateral sides of the structural portion 61, track profile portions 62 can be arranged and provide complementing profile portions C for each other, while overlapping regions R in projections along the transverse direction Y and the height direction Z are created.

Fig. 14 shows a schematic cross-sectional view of an additional embodiment of a track beam for a support assembly along the cross-sectional line A-A depicted in Fig. 4 comprising a structural profile portion in the form of a rectangular profile. At the top and the bottom of the rectangular profile, U-shaped structural profile portions 61 can be provided as complementing profile portions C. At the lateral sides of the structural portion 61, track profile portions 62 can be arranged and provide complementing profile portions C for each other, while overlapping regions R in projections along the transverse direction Y and the height direction Z are created.

Fig. 15 shows a schematic cross-sectional view of a further additional embodiment of a track beam 60 for a support assembly 10 along the cross-sectional line A-A depicted in Fig. 4 comprising a structural profile portion 61 in the form of a rectangular profile. Two U-shaped track profile portions 62 can enclose the structure above a portion 61 and provide complementing profile portion C. Overlapping regions R in projections along the transverse direction Y and the height direction Z are created.

Fig. 16 shows a schematic cross-sectional view of an embodiment of a track beam 60 for a support assembly 10 along the cross-sectional line A-A depicted in Fig. 4 comprising a structural profile portion 61 in the form of a hexagonal profile. Similar to the embodiment shown in Fig. 5, the structural profile portion 61 is surrounded by complementing profiles forming two essentially U-shaped track profile portions 62 which can be regarded as providing redundancy to each other and have overlapping regions O in a projection along the transverse direction Y. The track beam 60 can have an essentially point-symmetric cross-section.

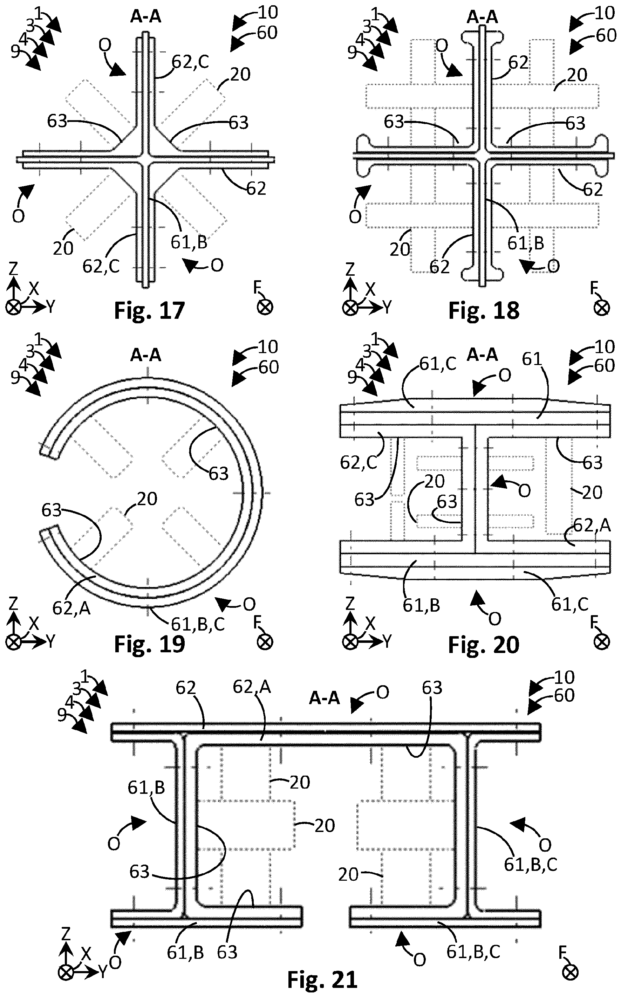

Fig. 17 shows a schematic cross-sectional view of an embodiment of a track beam 60 for a support assembly 10 along the cross-sectional line A-A depicted in Fig. 4 comprising a structural profile portion 61 in the form of a cross-shaped profile. Track profile portions 62 can be embedded into the cross-shaped structure profile portion 61 and can provide track sections extending essentially at a 45° angle with respect to the transverse direction Y. Similar to the embodiment shown in Fig. 5, the structural profile portion 61 is surrounded by complementing profiles forming two essentially U-shaped track profile portions 62 which can be regarded as providing redundancy to each other and have overlapping regions O in a projection along the transverse direction Y. The track beam 60 can have an essentially point-symmetric cross-section.

Fig. 18 shows a schematic cross-sectional view of a further embodiment of a track beam 60 for a support assembly 10 along the cross-sectional line A-A depicted in Fig. 4 comprising a structural profile portion in the form of a cross-shaped profile. Similar to the embodiment shown in Fig. 5, the structural profile portion 61 is surrounded by complementing profiles forming two essentially U-shaped track profile portions 62 which can be regarded as providing redundancy to each other and have overlapping regions O in a projection along the transverse direction Y. The track beam 60 can have an essentially point-symmetric cross-section.

Fig. 19 shows a schematic cross-sectional view of an embodiment of a track beam 60 for a support assembly 10 along the cross-sectional line A-A depicted in Fig. 4 comprising a structural profile portion 61 in the form of a C-shaped profile. A further C-shaped profile is placed within the structural profile portion 61 and provides track profile portion 62 with track sections 63 extending essentially at a 45° angle with respect to the transverse direction Y. Overlapping regions R in projections along the transverse direction Y and the height direction Z are created.

Fig. 20 shows a schematic cross-sectional view of a further embodiment of a track beam 60 for a support assembly 10 along the cross-sectional line A-A depicted in Fig. 4 comprising a track profile portion 62 in the form of a C-shaped profile. At the top and the bottom of the two C-shaped profiles, flat structural profile portions 61 can be provided as complementing profile portions C. The structural portions 61 and the track profile portions 62 can be arranged and provide complementing profile portions C for each other, while overlapping regions R in projections along the transverse direction Y and the height direction Z are created.

Fig. 21 shows a schematic cross-sectional view of another embodiment of a track beam 60 for a support assembly 10 along the cross-sectional line A-A depicted in Fig. 4 comprising a structural profile portion in the form of a C-shaped profile. At the top and the bottom of the two C-shaped profiles, further flat structural profile portions 61 can be provided as complementing profile portions C. The structural portions 61 and am Omega-shaped track profile portion 62 providing track sections 63 along its inner circumference can be arranged and provide complementing profile portions C for each other, while overlapping regions R in projections along the transverse direction Y and the height direction Z are created.

According to the present samples of the track beam 60, multiple load paths using cross sections like C-, I-, L- and U-profiles can be provided. Load introduction rollers of the carriage assembly 20 are shown with simple rectangles drawn with dotted lines. Outer parts, in particular respective track profile portions 62, can be considered as the respective main load path A. The inner parts, in particular, respective structural profile portions 61, can be considered as respective secondary or redundant load path B.

According to present examples for providing a multiple or at least double load path structure, a support assembly 10 for a high lift body 8, in particular a trailing-edge-flap, configured to be mounted to a spar 6 of a wing 3 and/or to the fuselage 2 of the aircraft 1, may comprise a track beam 60 configured for supporting the high lift body 8 at the spar 6 and/or the fuselage 2 movably between a stowed position S and a deployed position T along a motion path E, the track beam 60 having at least one structural profile portion 61 adapted for transferring operational loads of the high lift body 8 into the spar 6 and into the fuselage 2, and having at least one track profile portion 62 and at least one further track profile portion 62 supported at the at least one structural profile portion 61 and adapted for guiding a carriage assembly 20 for carrying the high lift device 8 movably along the motion path E and taking up the operational loads; wherein the at least one redundant structural profile portion 61 and/or the at least one track profile portion 62 are or is, respectively, provided with at least one redundant track profile portion 62 configured to alternatively and/or additionally transfer and/or take up the operational loads, respectively.

As described above, the inner load path can be provided as box, I-beam, U-shaped elements, cruciform, C-shape and/or carriage inside of the track beam 60. The outer parts can be fastened with each other and also these parts are fastened to the inner load path. Such an interconnected provides a fail-safe structure with multiple load paths, such as at least one main load path A and at least one redundant load path B. This can thus be considered as a "Damage Tolerant" design. For example, if a crack propagates in the parts on the outside, the outer parts are connected to each other and/or these parts can be fastened to an essential part to make the track beam 60 fail safe with multiple load paths.

For example, the main load path design includes U, C, I and/or L-shaped parts (typically outer parts) that are connected to the respective centre parts by means of fasteners (depicted as dash dotted lines). They can be additionally supported with an inner rectangular beam portion forming a box structure. The rectangular beam will take the load from the outer part if the outer main load path parts fail due to a crack.

According to further examples, the main load path A can include U-, C- and/or L-shaped parts (typically outer parts) fastened to the I-beam in the center. This takes the loads of main outer parts, if the outer main load path A parts fail due to a crack. The main load path A design may include U and/or C-shaped parts (typically outer parts) that are connected to both center parts (e.g., sideways π) means of fasteners. Further parts can provide the respective secondary or redundant load path B.

Main load paths A can be provided by means of four parts and two connecting parts as well as using the inner load path partly to connect the upper and lower outer parts. Each part can be formed like an L-shape with an extra thick track in the corner of the L-shape. Such parts can be additionally supported with an inner split rectangular beam made out of two U-channels forming a box structure. The split rectangular beam can take the load from the respective outer part if the outer main load path A part fails due to a crack. If one part fails at a track surface, the other part will take over the loads from the rollers.

The main load path A design may include L-shaped parts that are connected in the center with fasteners. The additional support is with an inner cruciform cross section beam part can be provided. This would take up loads of outer parts if the outer main load path parts fail due to a crack. The main load path A can be formed like a C-cross-section beam in the center and rollers are placed from inside of the beam. The open C-cross-section can further provide sufficient space to enable an attachment between the carriage assembly 20 where the rollers are attached to and the height of body 8. The outer parts can provide the secondary or redundant load path B.

Further examples can involve at least two C-section titanium track beam portions that are attached back-to-back. On the top and on the bottom a steel plate with stiffening ribs can be provided that connects both track beams if one of them fails. Different roller configurations are possible, for example two vertical rollers if the C-shaped track beams need to be very tall. Alternatively, or additionally, uses only a relatively big roller can be provided to react negative g-loads and positive high lift loads.

Fig. 22 shows a schematic perspective view of a detail XXII depicted in Fig. 3. The carriage assembly 20 comprises at least two load bearing parts 21 which can be each provided in the form of an O-shaped carriage module 22 and may have respective roller sub-assemblies 23. The connection assembly 50 may comprise at least two swing link elements 51 connected to the high lift body 8 and at least two load introduction brackets 52 connected to the carriage assembly 20. The swing link elements 51 and load introduction brackets 52 can each be provided as mounting part V and a redundancy part W, which may provide the main load path A and the redundant load path B, respectively.

Fig. 23 shows a schematic perspective view of a support assembly 10 and a carriage assembly 20 for a high lift body arrangement 4. The 'O-ring' carriage assembly 20 further comprises connecting elements 24, for example, in the form of doublers, connecting the load bearing parts 21 and/or carriage modules 22 to each other. The load introduction brackets 52 can be provided on a lateral side, for example as the mounting part V, and on a bottom side, for example, as the redundancy part W, of the carriage module 20, providing the main load path A, and the redundant load path B, respectively.

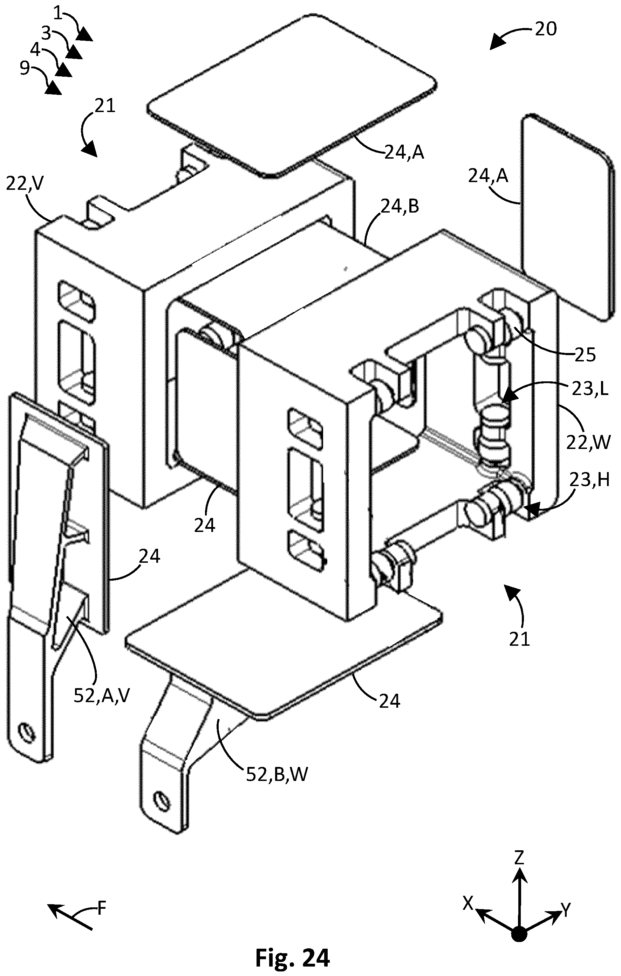

Fig. 24 shows a schematic perspective exploded view of the carriage assembly for the high lift body arrangement illustrated in Fig. 23. The connecting elements 24 may be provided on the outside and/or the inside of the carriage assembly 20 connecting the load bearing parts 21 and/or the carriage modules 22 to each other providing the main load path A, and the redundant load path B, respectively. Furthermore, the connecting elements 24 may be integrated into the load introduction brackets 52, for example, in that they allow for connecting the load introduction brackets 52 to the carriage assembly 20. Furthermore, the sub-roller sub-assemblies 23 may be provided as lateral L and horizontal H roller sub-assemblies 23 providing respective rollers 25.

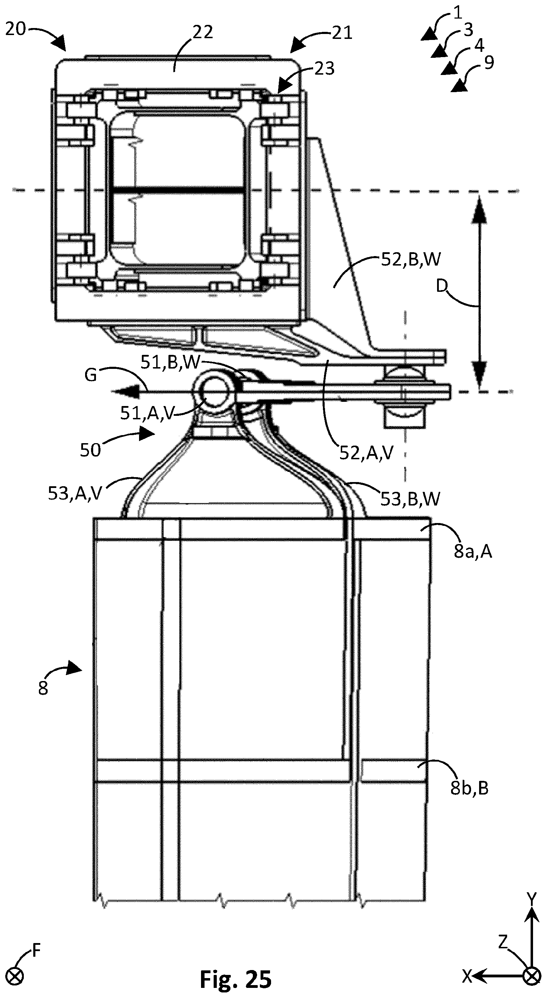

Fig. 25 shows a schematic perspective view of the carriage assembly 20 connected to the high lift body 8 for the high lift body arrangement 4 illustrated in Fig. 23. The connection assembly can further comprise at least two attachment elements 53, for example, in the form of respective links, for attaching the swing links elements 51 to the high lift body 8, in particular the first end rib 8a and the second end rib 8b thereof. The attachment elements 53 may thus be provided as a respective mounting part V and a redundancy part W for providing the main load path A and the redundant path B, respectively, as a fail-safe structure in a manner as described above.

According to the present example, high-lift loads G originating from the high lift body 8, such as a flap, are typically transferred to the carriage assembly 20 via the connection assembly 50 that introduces the loads into the carriage assembly 20 with an offset that is outboard of the midplane of the carriage assembly instead of into the midplane of the carriage assembly 20 which may be problematic due to space constraints (e.g., a clash with the fuselage 2). The high-lift loads G from the high lift body 8 are thus are transferred to the support assembly 10 via a the swing link elements between the flap and carriage. This swing link can compensate bending effects of the wing 3.

Due to the nature of the high-lift load G, a relatively high momentum may be acting on the carriage assembly 20 because of the asymmetrically positioned connection assembly 50 at the side of the carriage assembly 20. The closed 'O-ring' cross-section of the carriage assembly 20 helps in taking up such a momentum. The loads are then transferred to the track beam 60 by the roller sub-assemblies 23.

For example, a crack that would run along the length of the carriage assembly 20, essentially turning the cross-section into an 'open' cross-section, would not result in failure of the carriage structure as a whole due to the connecting elements 24, for instance doublers, connecting the second O-ring like carriage modules 22 that would thus act as a mounting part V and a redundancy part W, respectively. Similarly, any failure of a roller sub-assembly 245 on the carriage assembly 20 would not result in the failure of the carriage structure due the fact that thanks to the two load bearing parts 21 and/or carriage modules 22, the two respective sections of the carriage assembly 20 are connected to each other by the connecting elements 24.

In the present example, six connecting elements 24 are provided in the form of doublers and two load introduction brackets 52 are used to fix the 'O-Rings' together. These load introduction brackets 52 can thus be interpreted as doublers which are installed in addition to the connecting elements 24 on the inside and outside of the load bearing parts 21 and/or carriage module 22 thus rendering the high-lift body arrangement 4 fail-safe in that a possible failure scenario of any single element or component thereof is taken into account.

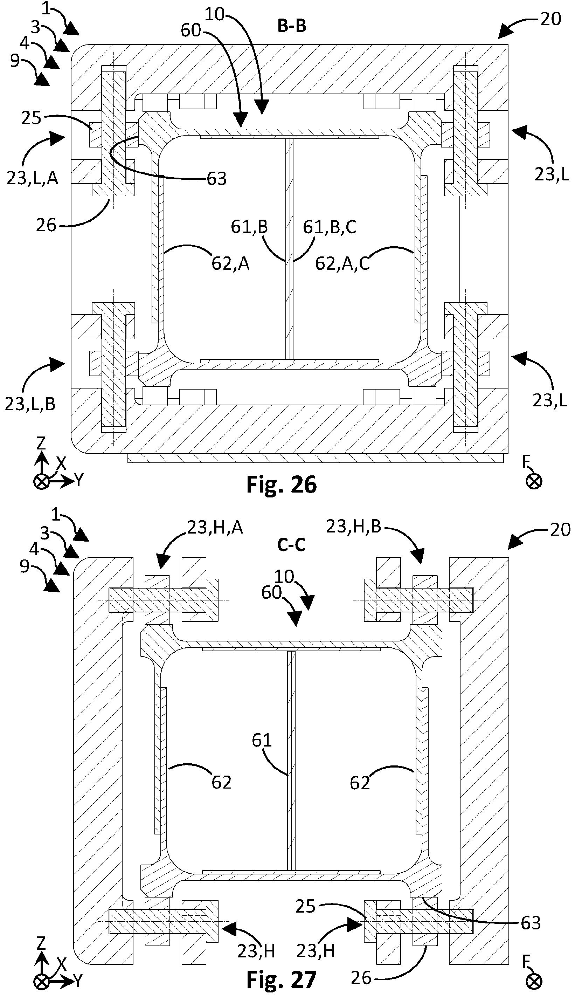

Fig. 26 shows a schematic cross-sectional view of the support assembly 10 and the carriage assembly 20 for a high lift body arrangement 4 across a cross-sectional line B-B depicted in Fig. 4. Here it becomes apparent that each of the roller sub-assemblies 23 comprises the roller 25 and a bolt 26 holding the roller. The lateral direction L roller sub-assemblies 23 laterally support the carriage 20 at the track sections 63 of the track beam 60. At least two roller sub- assemblies 23 arranged at each side of the carriage assembly 20 can provide the respective main load path A and redundant load path B.

Fig. 27 shows a schematic cross-sectional view of the support assembly 10 and the carriage assembly 20 for a high lift body arrangement 4 across a cross-sectional line C-C depicted in Fig. 4. The horizontal direction L roller sub-assemblies 23 horizontally support the carriage 20 at the track sections 63 of the track beam 60. Consequently, the carriage assembly 20 is supported via the roller sub-assemblies 23 in the horizontal direction H in an opposite to the height direction Z as well as in the lateral direction L in an against the transliteration Y and movable along the motion path E extending essentially in parallel to the longitudinal direction X and/or travel direction F.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: apparatus / aircraft
- 2: fuselage
- 3: wing
- 4: high lift body arrangement / high lift device
- 5: main body
- 6: spar (main body)
- 7: trailing-edge
- 8: high lift body
- 8a: first end rib
- 8b: second end rib
- 9: support station

- 10: support assembly

- 20: carriage assembly
- 21: load bearing part
- 22: carriage module
- 23: roller sub-assembly
- 24: connecting element
- 25: roller
- 26: bolt

- 30: drive assembly
- 31: drive organ / drive unit
- 32: drive shaft

- 40: actuation assembly
- 41: drive arm
- 42: actuating arm
- 43: transmission link / joint

- 50: connection assembly
- 51: swing link element
- 52: load introduction bracket
- 53: attachment elements

- 60: track beam / guidance sub-assembly
- 61: structural profile portion
- 62: track profile portion
- 63: track section

- 70: front attachment sub-assembly
- 71: connection lug

- 80: rear attachment sub-assembly
- 81: connecting link

- 90: side attachment sub-assembly
- 91: connecting link

- A: main load path
- B: redundant load path
- C: complementing profile portion
- D: offset distance
- E: motion path
- F: travel direction / direction of flight
- G: high lift body load / flap load
- H: horizontal direction

- L: lateral direction
- M: rotational axis / middle axis
- O: overlap region
- S: stowed / retracted position
- T: deployed position
- V: mounting part
- W: redundancy part
- X: longitudinal direction
- Y: transverse direction
- Z: height direction

## Claims

1. Support assembly (10) for a high lift device (8), in particular a trailing-edge-flap, configured to be mounted to a spar (6) of a wing (3) of an aircraft (1),
comprising a track beam (60) configured for supporting the high lift body (8) at the spar (6) and/or into a fuselage (2) of the aircraft (1) movably between a stowed position (S) and a deployed position (T) along a motion path (E), the track beam (60) having
at least one structural profile portion (61) adapted for transferring operational loads of the high lift body (8) into the spar (6) and/or into the fuselage (2), and
at least one track profile portion (62) supported at the at least one structural profile portion (61) and adapted for guiding a carriage assembly (20) for carrying the high lift body (8) movably along the motion path (E) and taking up the operational loads; wherein
the at least one structural profile portion (61) and/or the at least one track profile portion (62) are or is, respectively, provided with at least one complementing profile portion (C); and wherein
the at least one structural profile portion (61), the at least one track profile portion (62), and/or at least one complementing profile portion (C) are providing a main load path (A) and a redundant load path (B) configured to alternatively and/or additionally transfer and/or take up the operational loads, respectively.

2. Support assembly (10) according to claim 1, wherein the at least one complementing profile portion (C) is adapted to take up the operational loads independently of the at least one structural profile portion (61) and/or the at least one track profile portion (62).

3. Support assembly (10) according to claim 1 or 2, wherein the at least one complementing profile portion (C) at least doubles the at least one structural profile portion (61) and/or the at least one track profile portion (62).

4. Support assembly (10) according to at least one of claims 1 to 3, wherein the at least one structural profile portion (61) and/or the at least one track profile portion (62) and the respective at least one complementing profile portion (C) are nested into each other.

5. Support assembly (10) according to at least one of claims 1 to 4, wherein the at least one track profile portion (62) and the respective at least one complementing profile portion (C) at least sectionwise encompass and/or encapsulate the at least one structural profile portion (61) and the respective at least one complementing profile portion (C).

6. Support assembly (10) according to at least one of claims 1 to 5, further comprising at least one mounting part (V) configured to mount the track beam (60) to the spar (6) and/or to a fuselage (2) of the aircraft (1) for transferring and/or taking up the operational loads, wherein at least one redundancy part (W) is provided for the at least one mounting part (V) to redundantly transfer and/or take up the operational loads.

7. Carriage assembly (20) for carrying a high lift body (8), in particular a trailing-edge-flap, configured to be moved along the motion path (E) provided by the track beam (60) of a support assembly (10) according to at least one of claims 1 to 6.

8. Carriage assembly (20) according to claim 7, comprising at least two load bearing parts (21) each configured to be moved along the motion path (E) provided by the track beam (60) of the support assembly (10), and to provide a main load path (A) and a redundancy load path (B) to alternatively and/or additionally transfer and/or take up the operational loads, respectively.

9. Carriage assembly (20) according to claim 8, further comprising at least one connecting element (24) connecting the at least two load bearing parts (21) to each other.

10. Carriage assembly (20) according to at least one of claims 7 to 9, further comprising an O-shaped carriage module (22) configured to encompass the track beam (60).

11. Carriage assembly (20) according to at least one of claims 7 to 10, further comprising at least two sets of roller sub-assemblies (23) each configured to be roll along the motion path (E) provided by the track beam (60) of the support assembly (10).

12. Carriage assembly (20) according to at least one of claims 7 to 11, further comprising at least two device load introduction brackets (52) each configured to transfer an operational loads between the high lift body (8) and the carriage assembly (20).

13. High lift device arrangement (4) for a wing (3) of an aircraft (1), comprising at least one high lift body (8), in particular a trailing-edge-flap, configured to be attached to a support assembly (10) according to at least one of claims 1 to 6 and/or to a carriage assembly (20) according to at least one of claims 7 to 12.

14. Wing (3) for an aircraft (1), comprising at least one high lift device arrangement (4) according to claim 13.

15. Aircraft (1) comprising at least one wing (3) according to claim 14.
